# EUROPEAN PATENT APPLICATION

(11) **EP 3 190 002 A1**
(43) Date of publication of application: **12.07.2017**
(21) Application number: 17152979.5
(22) Date of filing: 13.11.2015
(51) Int. Cl.: B60P 1/44

(54) **GOODS MOVEMENT APPARATUS**

(30) Priority: 09.04.2015 GB 201506000
(62) Divisional of application: 15275233.3
(71) Applicant: Adams, William Mark, Retford, Nottinghamshire DN22 8PT (GB)
(72) Inventor: Adams, William Mark, Retford, Nottinghamshire DN22 8PT (GB)
(74) Representative: Wood, Graham

(57) **Abstract**

The invention relates to apparatus for use in the movement of goods and includes a transportable goods storage trailer provided with a tail lift at an opening into the trailer. The tail lift assembly is driven by powered drive means mounted in the trailer at the opposing end of the trailer from the end in which the opening is provided so as not to unduly decrease the available size of the opening.

## Description

The invention to which this application relates is in relation to apparatus for use in the movement of goods. In particular, although not necessary exclusively, the invention is for use in the movement of goods between storage areas, such as a first storage area in the form of a warehouse and a second, movable goods storage area in the form of, for example, a vehicle trailer provided as part of, or in connection with, a vehicle.

The movement of goods across a geographical area is most commonly achieved by vehicles which have a trailer in which goods are stored and moved. The goods may be separate items, such as parcels or the like, or may be grouped together and moved on pallets, trolleys, wheeled cages, or the like. In any case, there is a need for the goods to be unloaded from, and loaded onto, the trailer, most typically at a location such as a warehouse and a loading bay provided as part of the same.

The apparatus of the type to which the application relates includes a lifting platform which is vertically movable with respect a support frame. The goods can be lifted and lowered on the platform with respect to the support frame to allow the platform to be brought to the desired floor height of an adjacent goods storage area, and which floors are often provided at different heights. Once the platform is at the appropriate height, the goods can be moved to and from the adjacent floor which is at the same height. Typically the support frame is located such that one end of the platform is locatable adjacent an edge of a floor of a first of the goods storage areas and the opposing end of the platform is locatable adjacent an edge of a floor of the second of the goods storage areas. The applicant's co-pending application number EP1775246 discloses apparatus of this type.

A problem which is experienced with apparatus of this type is how to bridge a gap which exists between the edge of the platform and the edge of the adjacent floor, and, in particular, the floor of the transportable storage area. It should be appreciated that typically the goods are moved through an opening at an end of the transportable goods storage area and that typically the opening is relatively narrow and confined, which is especially the case if there is provided a tail lift assembly and/or door assembly at the opening. When a tail lift assembly is provided a portion of the same can be moved to an extended position outwardly from and externally of the opening and into a horizontal plane so that the portion provides a limited floor space to allow goods to be moved onto the same and then be moved to ground level, typically at a location for delivery of the goods such as to a retail unit.

The doors which are provided to selectively open and close the opening can take several forms but one possible group is the form in which the door is linearly movable and provided as a shutter or in the form defined in the applicant's co-pending application number EP2732999 in which there are provided first and second door panels which are linearly movable to allow selective access to portions of the opening into the trailer and typically to allow access to a floor of the trailer at a first height and, by movement of the door panels, to allow access to a floor at a spaced height above the first floor in the trailer.

The provision of this door apparatus at the opening and positioned between the end of the storage area frame and the end of at least the raised floor of the trailer, and the confined size of the opening, means that the bridging of the gap between the respective edges of the floor of the storage area and platform of the lifting apparatus is difficult to achieve and is currently not safely possible in a manner which allows a secure and sufficiently supported access path, especially when one considers the weight of the goods which may be moved across the same and the requirement to allow safe passage of personnel across the same.

A first aim of the invention is therefore to provide apparatus and a method which allows the said gap to be bridged safety and repeatedly and a further aim of the invention is to provide a means of moving components to allow the operation of lifts at the opening to another location in the goods storage area whilst ensuring that the lifts or doors operate efficiently. A further aim is to provide the apparatus at the opening of the transportable storage area in a manner which minimises the impact on access through the opening.

In a first aspect of the invention there is provided a transportable goods storage trailer, said trailer including a goods storage area defined by opposing side walls, a roof, at least one floor, a first end and a second end in which an opening is provided to allow goods to be moved therethrough into and from the interior of the goods storage area, a tail lift apparatus mounted on the trailer and the tail lift includes a portion at, and located externally of, the said opening and which is movable in a linear direction along guide means to alter the height of the same, and to allow the same to be deployed between in use and storage positions and characterised in that powered drive apparatus to allow the said portion to be moved is located at or towards the said first end of the goods storage area and is connected to the said portion via one or more elongate members which pass along the interior of the goods storage area.

In one embodiment the portion is movable between a substantially horizontal in-use position and a substantially vertical storage position by pivotal movement about an axis.

In one embodiment when the portion is in the in-use position the portion can be stood on and/or goods moved onto and from the same and the portion moved vertically.

Typically the guide means are mounted on the frame of the trailer.

In one embodiment the powered drive apparatus includes a hydraulic ram and hydraulic control system and they and the components for the same are located at the first end of the trailer.

In one embodiment the elongate members pass along the underside of the roof of the trailer and are located via pulley wheels.

In one embodiment a first elongate member connection is provided towards one side wall at the trailer roof and a second elongate member connection is provided towards the opposing side wall at the trailer roof

In one embodiment a first bridging portion is movably located on a platform of lifting apparatus adjacent to the trailer and a second bridging portion is movably located on the said floor

In one embodiment a door assembly is provided on the trailer at the opening.

Typically the support means is provided as part of the goods storage area and the support means and the edge of the floor define opposing side walls of a passage through which at least a portion of the door assembly can pass.

In one embodiment, at least one, but typically both, of the bridging portions are pivotally movable between a storage position and an in use position in which the same form a path between the platform and the floor and allow the passage of goods and/or personnel thereacross.

In one embodiment both of the first and second portions are provided in contact with the support means when they are in the in use position.

In one embodiment at least part of the support means is movable into a position to support at least one of the bridging portions when in the in use position. Alternatively the support means are provided in a fixed position.

Typically the support means are provided as an integral part of the chassis of the goods storage area.

In one embodiment the door assembly is a sliding door assembly such as a shutter door or the door assembly in the applicant's co pending patent application EP2732999. The door of the assembly is movable in a linear direction to allow the opening to be opened or closed. In one embodiment the door may be formed from a number of portions which can be selectively moved to allow selective access to portions of the opening.

In one embodiment the bridging portion connected to the platform is provided for powered movement between the in use and storage positions and the bridging portion connected to the goods storage area is provided to be capable of movement under the influence of the movement and/or position of the door assembly mounted thereon.

The vehicle trailer can be moved into position such that the opening through which the goods are to be moved is positioned adjacent to the said edge of the platform of the lifting apparatus.

In one embodiment the bridging portion attached to the platform is first movable into contact with the support means once the goods storage is in position and can be moved into position prior to the door assembly of the goods storage area being moved to an open position. Typically, once the bridging portion has been moved to contact the support means, so the door assembly can be moved to the open position and the bridging portion of the goods storage area is then free to be moved to the in use position in contact with the support means.

In one embodiment the tail lift can be moved to an in use position when the goods storage area is at a location which is remote from the lifting apparatus.

Specific embodiments of the invention are now described with reference to the accompanying drawings; wherein
Figure 1 illustrates a goods storage area and lifting apparatus in a schematic manner;
Figures 2a and b illustrate first and second embodiments of door assemblies of the type which can be used with the current invention;
Figure 3a illustrates a sectional elevation of support means and bridging portions, and Figure 3b illustrates a sectional end elevation along line A-A;
Figures 4a and b illustrate the bridging portions of Figure 3a in partial and fully engaged in use positions; and
Figures 5a and b illustrate movement apparatus in accordance with an embodiment of the invention.

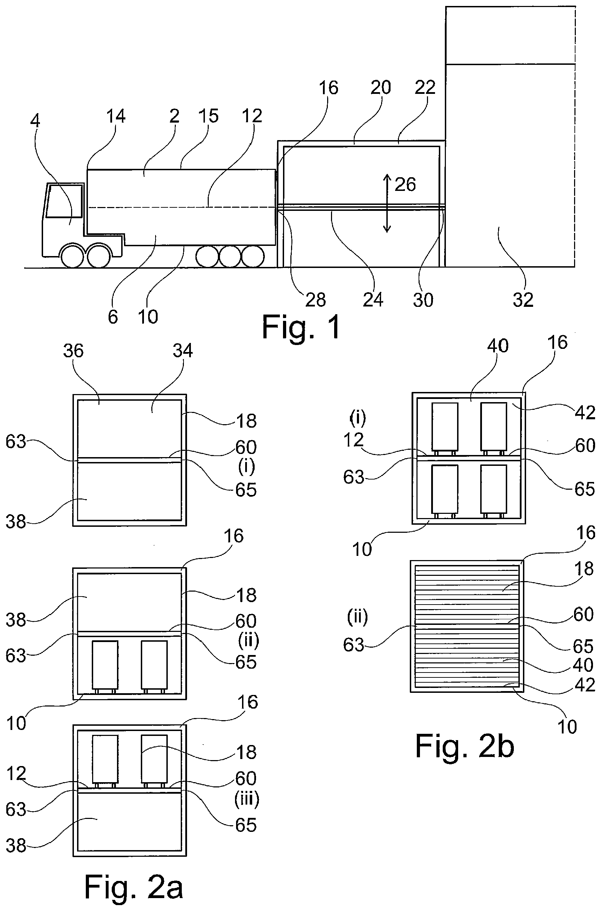

Referring firstly to Figure 1 there is illustrated a movable goods storage area in the form of a vehicle trailer 2 which is located on and movable by a vehicle 4 in a conventional manner. The goods storage area, in this embodiment, is defined by side walls 6,8 a floor 10, a raised floor 12, roof 15, a first end wall 14 and an opposing end 16 in which there is provided an opening 18. The opening, when open, allows the movement of goods into and from the goods storage area 2 and the goods are moved onto and from lifting apparatus 20. The lifting apparatus includes a frame 22 which is provided in a fixed position and on which is mounted a platform 24 and which is movable in the vertical direction indicated by arrow 26 to bring the platform to the height of the required floor 10,12. A first edge 28 of the platform is positioned such that the end 16 of the trailer 2 can be brought adjacent to the same. At the opposite edge 30 of the platform there is typically provided a second goods storage area in the form of a warehouse 32 such that the lifting apparatus allows the movement of goods between the first and second goods storage areas 2 and 32.

The trailer end 16 is provided with a door assembly 34 to allow the selective opening and closing of the opening 18 and two examples of this are provided in Figures 2a and b. In Figure 2a there is provided an assembly in accordance with the applicant's copending application EP2732999. In this case there are provided two door portions 36,38, which are independently movable so that the assembly can be provided in a position to fully close the opening as shown in (i), a first open position as shown in (ii) to allow access to a lower floor 10 of the trailer and goods thereon and a second opened position as shown in (iii) to allow access to the higher floor 12 of the trailer and goods thereon.

A second form of door assembly is shown in Figure 2b in which the door assembly is a shutter door 40 which has a free end 42 which can be moved from the open position adjacent the top of the opening as shown at (i) to the closed position at the floor 10 of the opening as shown at (ii).

In each case it will be appreciated that linear movement of the door assembly 34 is required to be possible and in order for the is to be possible there is required to be space 52 between the edge 44 of the upper floor 12 of the trailer, and the end of the trailer. The gap is necessary to accommodate the rear frame of the trailer 2 at the end 16 and, inwardly of the same, the door assembly 34 and the movement space 52 therefore which, in this embodiment, includes two movement channels 54,56 for movement of the door portions 36,38 of the door assembly 34 shown in Figure 2a.

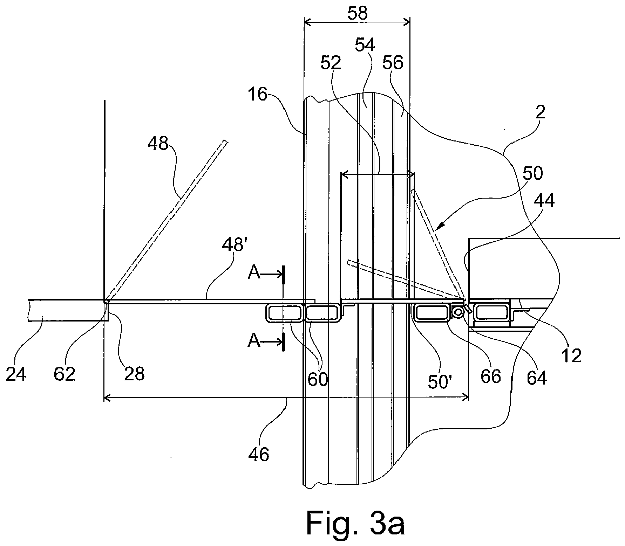

This means, and as shown in Figure 3a, that when the edge 44 of the floor 12 of the trailer 2 is positioned as close to the edge 28 of the platform 24 as is possible there is still a gap 46 between the respective edges. The gap 46 is such that, if not bridged, the movement of goods and/or personnel between the platform 24 and storage area floor 12 would not be possible.

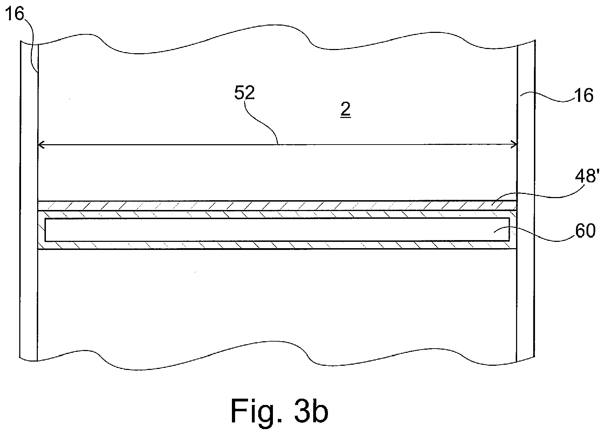

The gap 46 is bridged by the provision of a first bridging portion 48 provided on the platform 24 and a second bridging portion 50, provided on the floor 12 as shown in Figures 3a and b.

The bridging portions 48, 50 are each pivotally movable about respective pivot axes 62, 64 between storage positions shown in broken lines at 48, 50 and in use positions shown at 48', 50', When the portions are in the positions 48', 50' so a goods movement path is provided which allows the goods to be moved between the platform 24 and the floor 12 as indicated by arrow 58.

In order that the bridging portions 48, 50 are supported when in the in-use positions a support means 60 is provided in the form of one or more elongate beams which typically extend across the width of the opening and which are joined at their opposing ends 63,65 as shown in Figures 2a and b to the frame of the trailer 2 at the opening 16 so that they form an integral part thereof. The location of the support means ensures that there is still provided the space 52 between the support means 60 and the edge of the floor 12 such that the door assembly can still be moved when required through the space. Further support members 66 may be provided as part of the trailer frame if required.

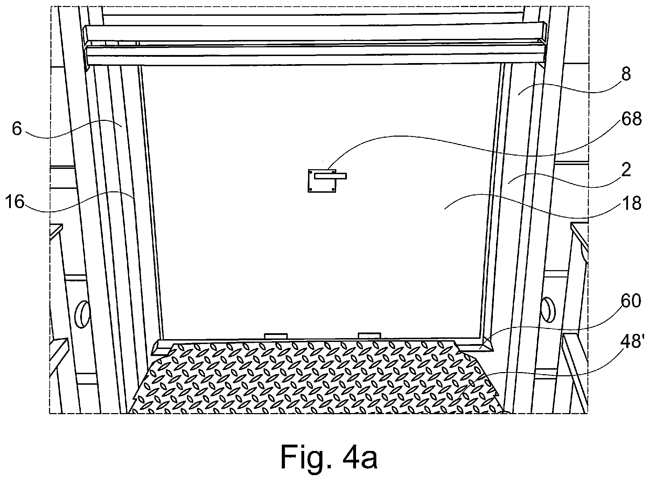

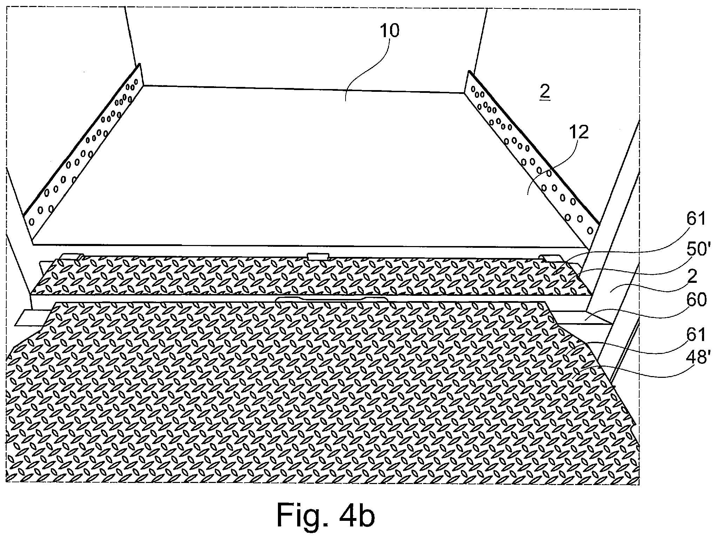

Figures 4a and b illustrate the manner in which the apparatus may be deployed, with the view shown being from the platform 24 looking towards the end 16 of the trailer 2 which has been brought into position for loading/unloading via the platform 24.. Starting from the position in which both the bridging portions 48, 50 are in the storage position shown in broken lines in Figure 3 and with the door assembly 34 of the opening 18 in the closed position shown in Figures 2a(i), it will be seen in Figure 4a how the bridging portion 48 of the platform can be moved down to the in use position 48' as shown to contact with the support means 60 of the trailer 2 with the door assembly 34 closed and hence the opening 18 still closed.

With the bridging portion 48' in position, access can then be gained to the door assembly release handle 68 by an operator when standing on the supported bridge portion 48' of the platform of the lifting apparatus and the door assembly can be moved to an open position to allow access to be gained to the interior of the trailer 2 as shown in Figure 4b. It should be appreciated that only part of the interior of the trailer is shown. The bridging portion 50 of the floor 12 (only the frame of which is shown but which would normally all be covered by boarding 70) can now be accessed and this is lowered down to the in use position 50' as shown in Figure 4b and the bridging portion is also supported by the support means 60 as shown so that a bridge 61 is created by the bridging portions to join the floor 12 and platform 24.

When loading or unloading is finished and the general movement of goods is no longer required, the bridging portion can be moved to the storage position 50, thereby allowing the door assembly 34 to be moved back to the closed position through the space 52 which is then available again.

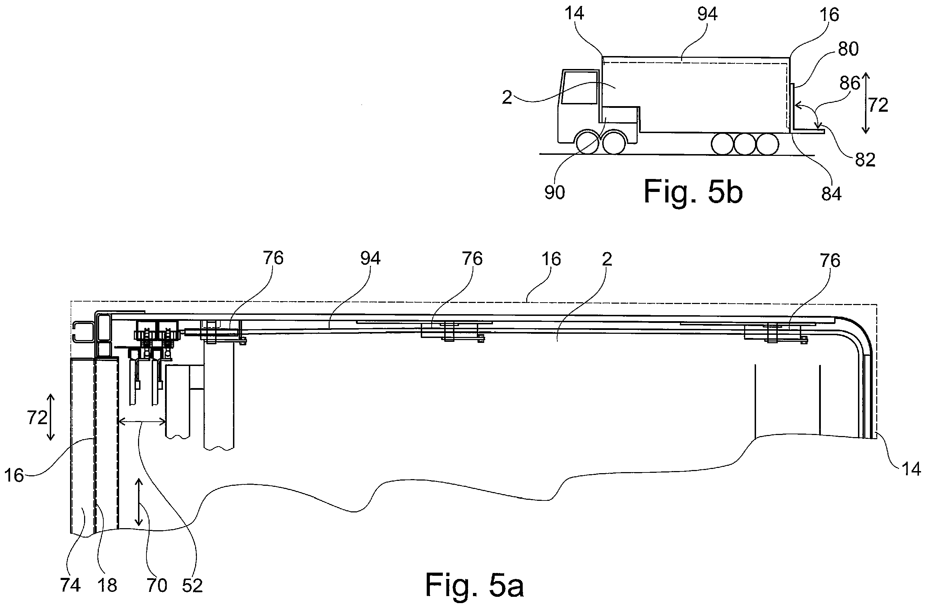

Figures 5a and b illustrate a side elevation of a storage area trailer 2, with, in Figure 5a the top or roof 15 of which is shown in broken lines. At the end 16 of the same there is again provided an opening 18 with a space 52 in which the door assembly 34 can be moved between open and closed position as indicated by arrow 70. In addition, in this case the trailer 2, at end 16, is also fitted with a tail lift assembly 80 with a portion 82 shown in Figure 5b, provided to be movable between a substantially horizontal in use position as shown and a vertical storage position by pivotal movement about axis 84 and as indicated by arrow 86 in a conventional manner. The height of the portion 82 can also be vertically adjusted as indicated by arrow 72.

When in the use position, the portion 82 can be stood on and/or goods moved onto and from the same and the portion can be moved vertically as indicated by arrow 72 along guide means 74 mounted on the frame of the trailer 2. The movement of the portion 82 is powered and in accordance with the invention, the powered drive apparatus includes a hydraulic ram and hydraulic control system and the components 90 of the same are mounted at the opposing end 14 of the trailer so as not to overly reduce the available space at the opening 18 of the trailer. This is in contrast to conventional apparatus where the powered drive apparatus would also be located at the opening 18 and hence reduce the available space at the opening.

In accordance with the invention, the powered drive apparatus is connected to the portion 82 and guide means 74 via elongate members such as steel cable or chains 94 which pass along the underside of the roof 15 of the trailer and via pulley wheels 76. Typically a first connection is provided towards one side wall 6 at the trailer roof 15 and a second connection is provided towards the opposing side wall 8 of the trailer roof 15. In this way the powered movement of the portion 82 of the tail lift can be achieved with a minimum impact on the space available within the trailer.

## Claims

1. A transportable goods storage trailer, said trailer including a goods storage area defined by opposing side walls, a roof, at least one floor, a first end and a second end in which an opening is provided to allow goods to be moved therethrough into and from the interior of the goods storage area, a tail lift apparatus mounted on the trailer and the tail lift includes a portion at, and located externally of, the said opening and which is movable in a linear direction along guide means to alter the height of the same, and to allow the same to be deployed between in use and storage positions and **characterised in that** powered drive apparatus to allow the said portion to be moved is located at or towards the said first end of the goods storage area and is connected to the said portion via one or more elongate members which pass along the interior of the goods storage area.

2. A trailer according to claim 1 wherein the portion is movable between a substantially horizontal in-use position and a substantially vertical storage position by pivotal movement about an axis.

3. A trailer according to claim 2 wherein when the portion is in the in-use position the portion can be stood on and/or goods moved onto and from the same and the portion moved vertically.

4. A trailer according to claim 1 wherein the guide means are mounted on the frame of the trailer.

5. A trailer according to claim 1 wherein the powered drive apparatus includes a hydraulic ram and hydraulic control system and they and the components for the same are located at the first end of the trailer.

6. A trailer according to claim 1 wherein the elongate members are steel cable or chains.

7. A trailer according to claim 1 wherein the elongate members pass along the underside of the roof of the trailer and are located via pulley wheels.

8. A trailer according to claim 7 wherein a first elongate member connection is provided towards one side wall at the trailer roof and a second elongate member connection is provided towards the opposing side wall at the trailer roof.

9. A trailer according to claim 1 **characterised in that** the apparatus includes a door assembly located at the said opening.

10. A trailer according to claim 9 **characterised in that** a passage is provided through which at least a portion of the door assembly passes.

11. A trailer according to claim 1 **characterised in that** a first bridging portion is movably located on a lifting apparatus platform externally of the goods storage area and a second bridging portion is movably located on the said floor of the good storage area, said bridging portions selectively movable to bridge a gap between the floor and the lifting apparatus platform.
